# EUROPEAN PATENT APPLICATION

(11) **EP 4 418 000 A1**
(43) Date of publication of application: **21.08.2024**
(21) Application number: 23315035.8
(22) Date of filing: 17.02.2023
(51) Int. Cl.: G01S 7/41, G01S 13/88, G01S 13/02

(54) **RADAR DATA PROCESSING BY DNN**

(71) Applicant: IMRA Europe S.A.S., 06904 Sophia Antipolis (FR)
(72) Inventor: Nakano, Yuta, 06560 Valbonne (FR); Bendahan, Remy, 06160 Juan les pins (FR); Fujita, Takeshi, Fukuoka (JP)
(74) Representative: Novagraaf International SA

(57) **Abstract**

A computer-implemented method for detecting an object (1) in a monitored area (200) of a monitoring device (100) having a first predetermined number of receivers (21) and a second predetermined number of transmitters (22), the method comprising the steps of:
- dividing raw signal data into divided signal data for each receiver (21) linked to each transmitter (22), so as to have a divided set of a third predetermined number of divided signal data, the third predetermined number being equal to the first predetermined number multiplied by the second predetermined number,
- inputting the divided set in a deep neural network (DNN) having a receiver layer having a number of feature extraction branches equal to the first predetermined number, and a transmitter layer having a number of feature extraction branches equal to the second predetermined number,
- outputting a detection of the at least one object (1).

## Description

The present invention relates to the field of method for detecting objects in monitored areas.

Methods for detecting objects in monitored areas are known in the art, in particular method using neural networks.

The document US2021396843A1 discloses the input of filtered data of millimeter wave radar sensor signal into deep neural network. It discloses the use of filtering such as band-pass filtering and low pass filtering as pre-processing. This approach is not specific because researches in radar signal processing use Fourier transform (kind of filtering) to make a distance map as explained below (see fourth prior art). The different point from the distance map approaches is the number of filtering. Although it is needed to apply Fourier transforms three times to make the distance map, this document discloses only one filtering. Then, a lack of performance by less filtering is compensated by adding convolutional layers in neural network part.

That is, the drawbacks are that this prior art does not achieve better performance compared with other conventional approaches due to lack of the convolutional layer to reduce noises. Further, another issue in radar processing, which is unclean data by mixing signals from different transmitters, still exists. In the situation to deal with training data that mixes signals from multi-transmitters, the training will be more difficult to achieve better performance.

The document US2021318427A1 discloses the idea to apply filtering and centerizing (normalization) on radar data before inputting to a neural network. In terms of methodology, it is similar to the above mentioned prior art, however, this second prior art document includes several application points, for example, verifying and identifying of a user by his gestures, etc. About the filtering, this second prior art uses a frequency filter, concretely eighth-order Butterworth high-pass filter having a cutoff frequency of 31250 Hz, in order to filter out low-frequency noise.

The drawbacks of the second prior art are that the filtering has to be designed by hand, for example, the one skilled in the art using this should determine algorithm and parameters (frequency) from its own knowledge and experiences. In this approach, a trial-and-error method to change the algorithm and parameters depending on application is needed, which consumes much time and effort.

The document US2021255304A1 discloses the method to process radar data without making distance map. However the different point from other prior arts (above mentioned first and second prior art) is to convert radar signal from polar space to cartesian coordinate space. For example, in the application whose final output is displayed on map, cartesian coordinate information is necessary although the raw radar data. is in polar coordinate space (complex number). That is why, this prior art uses polar-to-cartesian coordinate transform as a pre-processing for neural network.

However, this third prior art has the following drawbacks. The cartesian coordinate is intuitively understandable because this coordinate is close to human vision compared to the polar coordinate (nevertheless, processing is simpler than making distance map, which is described in the below fourth prior art), but still complex and time consuming.

The document "Deep Learning-based Object Classification on Automotive Radar Spectra" of Kanil Patel et al., from Bosch Center for Artificial Intelligence, Renningen, Germany and Institute of Signal Processing and System Theory, University of Stuttgart, Stuttgart, Germany discloses the following. This article is representative of the technologies that use distance map derived from radar sensor data. This article and other researches input the distance map into deep neural network for object detection and classification. In fact, this approach is convenient to handle and to measure the performance because it is possible to confirm detection or classification results by visual inspection on the map (the map is synchronized with human vision). Then, thanks to this advantage, it is convenient to make a training dataset (annotation), that is this approach is used when using a machine learning method.

However, although distance map is convenient to handle compared with raw data, many information disappear in the process of making the map. Most common way to make the map from radar data is to apply Fourier transform in several times (e.g. 3 times FFT for making map with speed of objects). In this process, information such as reflected radar wave is deleted because the Fourier transform limits the extracted bands. Therefore, if it is desired to use all information included in raw data, it is necessary to deal with raw data without any filtering.

That is, in view of the prior art, there is a need for overcoming the mentioned drawbacks and to improve the recognition or detection accuracy, while simplifying and limiting the effort to achieve the same. That is, there is a need for reducing the computational effort and time, and limiting resources.

Thereby, an aim of the present invention is to overcome the disadvantages of the prior arts mentioned, and in particular to improve the recognition or detection accuracy, while simplifying and limiting the effort to achieve the same. In other words, there is a lot of useful information in the radar signal (raw data), and there is a desire to make the most of it. The Fourier transform (FFT) is a convenient method to extract meaningful information but at the same time, it deletes many information that might be useful for detection or recognition. This is why the present invention deals with radar signal without any filtering at the early beginning.

A first aspect of the present invention relates to a computer-implemented method for detecting at least one object in a monitored area of a monitoring device, the monitoring device having a first predetermined number of receivers and a second predetermined number of transmitters, the method comprising the steps of :
- receiving raw signal data from the monitoring device,
- dividing the raw signal data into divided signal data for each receiver linked to each transmitter, so as to have a divided set of a third predetermined number of divided signal data, the third predetermined number being equal to the first predetermined number multiplied by the second predetermined number,
- inputting the divided set in a deep neural network (DNN), wherein the deep neural network comprises at least one receiver layer having a number of feature extraction branches equal to the first predetermined number, and at least one transmitter layer having a number of feature extraction branches equal to the second predetermined number,
- outputting a detection of the at least one object in the monitored area based on a result of the processing step.

This allows to provide an improved method with more accuracy and improved speed, with a simplified construction.

That is, DNN transforms input data to extract important data and to reduce redundant data for outputting required results. Therefore, preparing each branch for input from each receiver/transmitter equals to doing feature extraction specific for each receiver/transmitter.

It is possible to not only detecting objects but also classifying image (scene, etc) or pixels. That is, it is possible to use the present method not only for object detection, but also classification, segmentation and other purposes.

The raw data is the signal from devices without any converting/filtering.

Advantageously, the DNN has an input layer or input nodes.

This allows to input data in the DNN.

Advantageously, the raw signal is divided into several groups and the divided set is sent to the corresponding branch.

Advantageously, the DNN has an output layer or output nodes, having preferably the number of neurons or branches equal to the number of seats (or available places) in the vehicle.

Advantageously, the DNN has both branch part and fully connected part. That is, branches are used in input part, and then fully connected layer is used in output part.

Advantageously, the transmitter is a radar, preferably sending millimeter waves.

Advantageously, the transmitter is a wireless device emitting waves. It could be a sonar, a lidar, a light emitter or a radio emitter, or any suitable device.

Advantageously, the receiver is arranged to detect the emission of the transmitter and/or the re-emission reflected by the object to be detected (or by any other object in the monitored area).

Advantageously, the monitoring device is placed in a vehicle.

Advantageously, the monitored area is inside the vehicle.

Advantageously, the object is an occupant of a vehicle such as a driver, a passenger, an animal or a thing such as a child seat.

This allows to detect object in the vehicle, in particular to avoid to leave a child or an animal in the car which is parked for long time in the parking for example. Further, this allows to confirm child (baby) existence even if child seat is installed or not.

Advantageously, the DNN, in particular the receiver layer and/or the transmitter layer, is trained, preferably by supervised learning.

It is possible to use a training dataset (radar data + labels (i.e correction, e.g. seat A and C have occupant)), then DNN is trained by following the label.

This allows to improve the performance of the method, in terms of accuracy and speed for example.

The radar uses millimeter wave, but after receiving, the data is transformed into digital data, whatever the transmission is.

Millimeter wave is high frequency wave.

That is, we can send a large amount of data, so it is used in data transfer by mobile for example. The higher the frequency is, the higher the resolution is. In contrast, the higher the frequency is, the shorter the transferred distance is.

Advantageously, the monitoring device is arranged to monitor outdoor.

Advantageously, the monitoring device is arranged to monitor on the road (e.g. bus stop seat occupancy).

Advantageously, the monitored area is outside the vehicle.

Advantageously, the monitoring device is arranged to monitor an inside of a room.

Advantageously, each said branch is composed of one or multiple nodes (neurons) in DNN architecture.

Advantageously, each branch of the receiver layer and each branch of the transmitter layer is paired (allocated) to a corresponding divided signal data for each receiver linked to each transmitter.

Inputting in the DNN the divided set is done as follows : inputting in the paired branch of receiver layer and transmitter layer the corresponding divided signal data for each receiver linked to each transmitter.

The DNN, in particular the feature extraction, transforms input data to extract important data and to reduce redundant data for outputting required results.

Therefore, preparing each branch for input from each receiver/transmitter equals to doing feature extraction specific for each receiver/transmitter.

Other features and advantages of the present invention will appear more clearly from the following detailed description of particular non-limitative examples of the invention, illustrated by the appended drawings where:
figure 1 represents a schematic arrangement of a monitoring device and a functioning of the computer-implemented method for detecting at least one object according to the present invention,
figure 2 represents a deep neural network DNN according to the present invention,
figure 3 represents raw signal data to be processed by the method according to the invention,
figure 4 represents raw signal data being divided by the method according to the invention,
figure 5 represents the functioning of the method according to the invention,
figure 6 represents a schematic diagram of phase difference between receivers of the monitoring device.

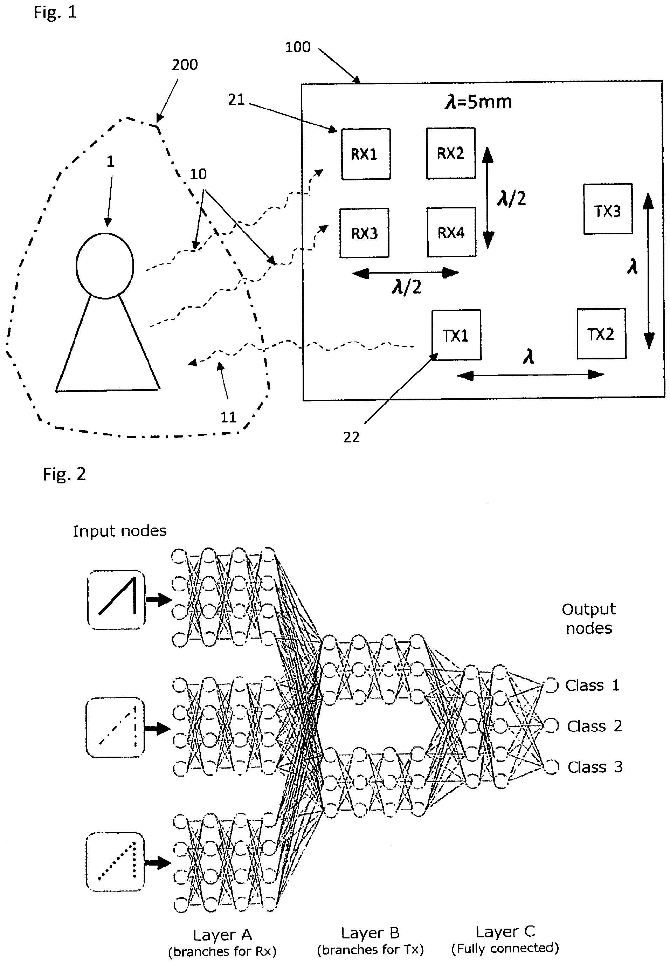

Figure 1 represents a schematic arrangement of a monitoring device 100 and a functioning of the computer-implemented method for detecting at least one object according to the present invention.

The monitoring device 100 is arranged to monitor a monitored area 200, wherein at least one object 1 to be detected is placed (or may be placed).

The monitoring device 100 may be placed in a vehicle and the object 1 may be e.g. a person, a child, an animal (such as a dog or a cat or any kind of animal), a child seat, or any type of object, being alive or a thing.

The monitored area 200 may be an inside of the vehicle, and the result (or output) of the method could be to detect the presence of the object 1 (person, animal or thing, etc). Further, the result of the method could be to identify the object 1, that is to say to state that the object 1 is a person, an animal or a thing, and preferably of which kind. Still further, the result of the method could be to identify where the object 1 is, in the monitored area 200. For example (non-limitative), the result could be "an adult is placed on the right seat on the first row of the car", or "a child is placed on the right seat on the second row of the car", or "a child is placed on the central seat on the second row of the car and is in its child seat" or "a child seat is placed on the left seat on the second row of the car and is empty" or "a dog is placed on the left seat of the third row of the car".

The monitored area 200 may be also an outside of the vehicle. Thereby, the result (non-limitative) could be "a cyclist is stopped at 100 meters on the left side of the road", or "a pedestrian is moving in the middle of the street, at 25 meters", or "the speed of said pedestrian is 5 km/h", or "the speed of said pedestrian is abnormally high" (compared to usual walking speed), or "a car is moving on the right side of the road", or "a car is moving on the right side of the road in the forward direction".

The monitoring device 100 may be equipped with receivers (Rx or 21), in particular with a first determined number of receivers, for example four receivers Rx1, Rx2, Rx3, Rx4 and with transmitters Tx, in particular with a second predetermined number of transmitter, for example three transmitters Tx1, Tx2, Tx3.

The transmitters 22 (or Tx) may be spaced apart from a distance lambda (symbol λ). The distance lambda is e.g. 5 mm. The receivers Rx may be e.g. spaced apart from lambda divided by two.

The transmitters Tx emit one or more transmitted waves 11, which may be reflected by the object 1 as one or more reflected waves 10. The reflected waves 10 may be received (or captured) by the receivers Rx. The type of signals and raw signal data of the transmitters Tx and the receivers Rx will be explained with more details here after.

Figure 2 represents a deep neural network DNN according to the present invention.

The deep neural network DNN comprises at least one receiver layer (layer A) and at least one transmitter layer (layer B). The DNN may further comprises input nodes and output nodes. The DNN may optionally have an additional layer (layer C) for any purpose.

The receiver layer has a number of feature extraction branches equal to the first predetermined number. The transmitter layer has a number of feature extraction branches equal to the second predetermined number.

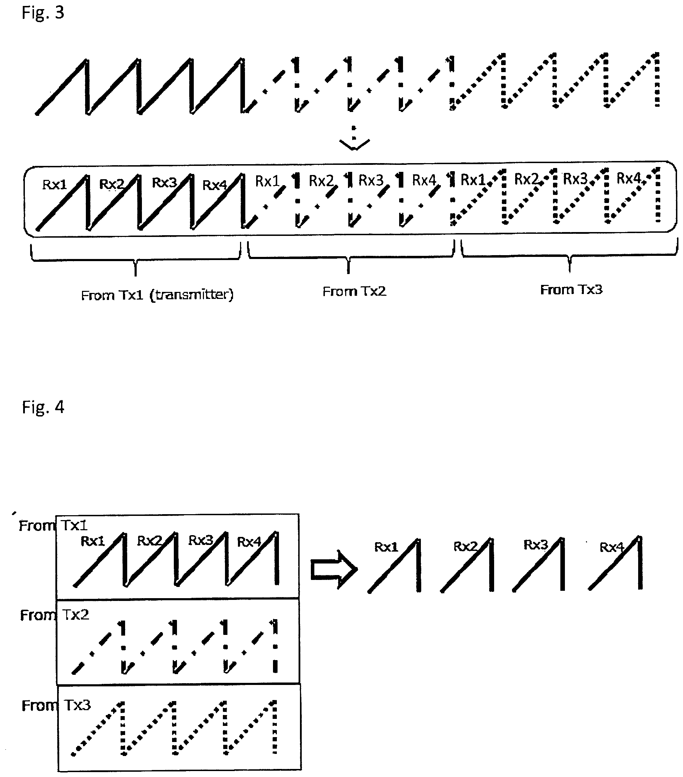

The input nodes is arranged to divide raw signal data from the monitoring device, in particular from the receivers, into divided signal data. That is, the input nodes are arranged to divide the raw signal data into divided signal data for each receiver and linked to each transmitter, so as to have a divided set of a third predetermined number of divided signal data, the third predetermined number being equal to the first predetermined number multiplied by the second predetermined number. The division of the raw signal data will be further explained with reference to figures 3 and 4. The divided set (of raw signal data) is inputted to the receiver layer for processing.

The receiver layer processes the divided set of raw signal data, in particular for denoising of the data, while running feature extraction (FE), with a training. The transmitter layer processes the processed data from the receiver layer, while running feature extraction, so as to correct the computation of angle by grouping correctly the signal from transmitters. The processed data from the transmitter layer is sent to the next layer (layer C) which is a fully connected one, and then finally sent to the output nodes.

The output nodes may have for example two branches (without being limited to such number) and finalize the results to be outputted by the DNN (e.g. class 1, class 2, class 3, passenger on seat number 1, etc).
This could be for example a cleaning of the results. For example, the transmitter layer (layer B) outputs some probabilities of results and the output nodes concludes with a result..,

Figure 3 represents raw signal data to be processed by the method according to the invention.

The raw signal data (upper portion of the figure) is schematically represented as chirps in a (common) frame.

The input nodes allow to divide the frame in identified chirps with a double reference to the receiver and the transmitter it concerns. For example, it is then possible to identify that the first chirp belongs to the first receiver Rx1 and the first transmitter Tx1 (that is to say signal emitted from the first transmitter Tx1 and reflected to the first receiver Rx1 by the object 1). The same applies for other chirps, e.g. the seventh chirps starting from the left belong to the third receiver Rx3 and the second transmitter Tx2 (that is to say signal emitted from the second transmitter Tx2 and reflected to the third receiver Rx3 by the object 1). That is, the number of chirps is equal to the third predetermined number (i.e. equal to the first predetermined number multiplied by the second predetermined number). In the given example, there are twelve chirps (three transmitters Tx1 to Tx3 multiplied by four receivers Rx1 to Rx4).

Figure 4 represents raw signal data being divided by the method according to the invention.

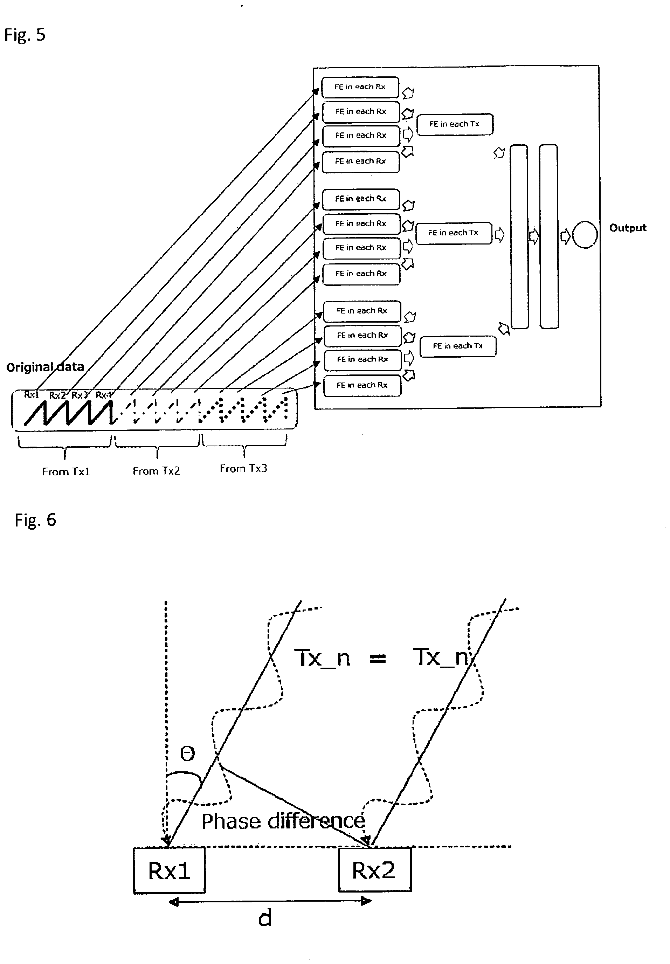

That is, the input nodes allow to individualize the chirps, that is to say to divide the frame into single chirps, as mentioned above. The idea is to detach each chirp, so that each chirp could be sent to corresponding branch of the receiver layer, as further explained in figure 5.

Figure 5 represents the functioning of the method according to the invention, with feature extraction (FE) branches.

The divided set of each chirp corresponding to each receiver and each transmitter is inputted in the receiver layer, at the level of the correspond one branch. Then, the processed data from the receiver layer are inputted in the transmitter layer, at the level of the corresponding branch. The output from the transmitter layer is then sent to the output nodes, for outputting a clear result.

In input nodes (as visible in figures 2 or 5, as discussed before, each divided data (chirp) is inputted into each branch.

From the implementation point of view, it is necessary to prepare one or multiple nodes on the edge of each branch because each chirp is composed of 128, 256 or other numbers numerical data, depending on the sensor specification or pre-processing.

In a preferred embodiment, each signal will pass both layers, it means each signal has to have two class attributions.

That is, the first point is to avoid the mixing signals from different transmitters, it means we want to use attribution of Tx. Further, the second point is to deal with signals in each Rx for precise angle computation drawn as Figure 6.

That is, dealing with two attributions is necessary for angle computation such as Figure 6 described here after.

In other words, the prior art deals with all data as same and input all data at once without clear separation. The present invention has better performances by differentiating the layers in dependency of the structure of the hardware (such as numbers of receivers and number of transmitters), with receiver layer having the number of feature extraction branches equal to the number of receivers, and transmitter layer having the number of feature extraction branches equal to the number of transmitters.

Figure 6 represents a schematic diagram of phase difference between receivers of the monitoring device.

This is to illustrate the phase difference between reflected signal to the first receiver Rx1 and to the second receiver Rx2. Phase difference is computed by using signals from same transmitter and at different receivers. So if we consider this computation in DNN, two attributions (Tx and Rx info) are necessary.

It is of course understood that obvious improvements and/or modifications for one skilled in the art may be implemented, still being under the scope of the invention as it is defined by the appended claims.

## Claims

1. A computer-implemented method for detecting at least one object (1) in a monitored area (200) of a monitoring device (100), the monitoring device (100) having a first predetermined number of receivers (21) and a second predetermined number of transmitters (22), the method comprising the steps of :
- receiving raw signal data from the monitoring device (100),
- dividing the raw signal data into divided signal data for each receiver (21) linked to each transmitter (22), so as to have a divided set of a third predetermined number of divided signal data, the third predetermined number being equal to the first predetermined number multiplied by the second predetermined number,
- inputting the divided set in a deep neural network (DNN), wherein the deep neural network comprises at least one receiver layer having a number of feature extraction branches equal to the first predetermined number, and at least one transmitter layer having a number of feature extraction branches equal to the second predetermined number,
- outputting a detection of the at least one object (1) in the monitored area (200) based on a result of the processing step.

2. The computer-implemented method according to claim 1, wherein the transmitter is a radar.

3. The computer-implemented method according to any one of the preceding claims, wherein the monitoring device (100) is placed in a vehicle.

4. The computer-implemented method according to any one of the preceding claims, wherein the monitored area (200) is inside the vehicle.

5. The computer-implemented method according to any one of the preceding claims, wherein the object (1) is an occupant of a vehicle such as a driver, a passenger, an animal or a thing such as a child seat.

6. The computer-implemented method according to any one of the preceding claims, wherein the DNN, in particular the receiver layer and/or the transmitter layer, is trained, preferably by supervised learning.
